# FASCICULE DE BREVET EUROPEEN

(11) **EP 0 376 765 B1**
(45) Date de publication et mention de la délivrance du brevet: **20.09.1995**
(21) Numéro de dépôt: 89403049.3
(22) Date de dépôt: 06.11.1989
(51) Int. Cl.: G01R 13/40, B21F 27/20, G01D 7/00, G06K 17/00

(54) **Installation pour le positionnement de composants d'armatures de béton armé notamment et procédé pour la mise en oeuvre de ladite l'installation**
Anlage zur Herstellung von Stahlbeton-Panzierungen, und Verfahren zum Betreiben dieser Anlage
Device for the manufacture of reinforcement for armoured concrete and process for the use of this device

(30) Priorité: 24.11.1988 FR 8815610
(43) Date de publication de la demande: 04.07.1990
(73) Titulaire: ARMA- PLUS SOCIETE ANONYME:, 44800 Nantes Saint-Herblain (FR)
(72) Inventeur: Touya, Jean-Jacques, F-44000 Nantes (FR)
(74) Mandataire: Phélip, Bruno

(56) Documents cités:
- EP-A- 0 052 306
- EP-A- 0 142 434
- DE-A- 2 315 715
- DE-A- 3 136 395
- FR-A- 2 046 610
- FR-A- 2 155 083
- PATENT ABSTRACTS OF JAPAN vol. 7 no. 241 (P-232)(1386). 26 octobre 1983 & JP-A-58 127 282 (KONPIYUUTAA SERVICE KK) 29 juillet 1983

## Description

La présente invention concerne une installation pour la fabrication d'armatures selon le préambule de la revendication 1. Une telle installation est utilisée pour la répartition et/ou positionnement d'éléments entrant dans la composition d'un produit qui se présente sous la forme d'un assemblage de pièces longitudinales et de pièces de liaison disposées transversalement, comme par exemple une armature de béton arme. L'invention concerne également le procédé pour la mise en oeuvre de l'installation.

La fabrication des armatures pour béton a beaucoup évolué au cours des dernières décennies et ces armatures, précédemment réalisées directement sur le chantier, sont maintenant coupées, façonnées et montées dans des usines spécialisées.

Les techniques actuelles de fabrication consistent dans un premier temps, à partir d'un plan de montage spécifique, à repérer le positionnement des aciers de répartition à assembler sur les éléments filants longitudinaux de base. Ce repérage est réalisé à partir d'un dispositif manuel de mesure, par traçage sur les éléments d'armature de base ou, comme décrit dans les documents EP-A-0 142 434 ou FR-A-2 155 083, par un positionnement de mâchoires amovibles de blocage, disposées sur une structure longitudinale. Ce repérage est suivi de l'assemblage des aciers de répartition sur les éléments filants, au moyen d'une soudure à l'arc ou soudure électrique par résistance.

Le repérage manuel du positionnement des aciers de répartition sur les éléments filants, est une opération longue et peu précise ; dans le cas où on constate des anomalies de positionnement, en fin de répartition, il est nécessaire de vérifier et éventuellement de recommencer l'intégralité du montage. Cette opération de repérage représente généralement environ 25 % du coût de montage.

La présente invention a pour but de pallier à ces inconvénients. Elle permet notamment de supprimer les temps de repérage et de traçage manuels, nécessaires au montage d'une pièce d'armature ; ceci entraîne des gains de productivité de l'ordre de 20 à 25 % du temps utilisé au montage des pièces. Elle permet, de plus, de supprimer les erreurs éventuelles liées au calcul ou à la mesure des intervalles entre les aciers de répartition.

L'invention a pour objet une installation pour la fabrication d'armatures pour béton armé notamment, constituées de filants longitudinaux reliés par des composants transversaux. Cette installation comporte des supports pour les filants longitudinaux ou pour une pige, ainsi qu'une structure longitudinale en forme de règle munie d'un système de repérage et d'affichage de la répartition longitudinale d'au moins un composant ou famille de composants. Conformément à l'invention, cette installation est caractérisée en ce que ladite structure longitudinale en forme de règle comporte une origine et est disposée en regard desdits filants ou pige, et en ce que son système de repérage et d'affichage est connecté à des moyens d'activation qui permettent, grâce à des moyens électroniques et informatiques, sa mise en oeuvre automatique en fonction des données spécifiques du schéma de répartition longitudinale désiré, préalablement mémorisé sur des moyens informatiques.

Le dispositif de repérage et d'affichage est constitué de la structure longitudinale en forme de règle munie d'une origine et de moyens fugitifs d'indication du positionnement des différents éléments constitutifs de l'armature. Ces moyens constituent un système de repérage et d'affichage de la répartition longitudinale d'au moins un composant ou famille de composants de l'armature ; ils peuvent être en forme de simples repères fixes répartis sensiblement régulièrement sur la longueur de la structure longitudinale, ou en forme d'organes traceurs montés sur un chariot mobile qui se déplace sur la longueur de la règle. Dans ce dernier cas, le système de repérage peut consister en une tête d'impression disposée directement sur le chariot mobile ; les organes traceurs peuvent être du type à jet d'encre ou par faisceau laser.

La structure longitudinale en forme de règle est réalisée en un seul ou plusieurs tronçons dont la longueur est adaptée à celle des armatures à réaliser. Selon un mode de réalisation préféré, cette règle comporte un système de repérage constitué d'un grand nombre de repères en forme de diodes électroluminescentes disposées sur sa longueur ; cette règle, associée à son système de repérage, constitue un gabarit pour le positionnement d'au moins un composant ou famille de composants.

Les diodes électroluminescentes sont activées automatiquement par des moyens électroniques et informatiques comportant une mémoire qui renferme l'ensemble des paramètres destinés à la réalisation de l'armature. Ces moyens électroniques et informatiques réalisent le pilotage, à la demande, de l'activation des repères, en fonction de l'armature à réaliser. Les repères sont ainsi gérés par des moyens informatiques qui permettent, à partir de la définition structurelle de l'armature, d'afficher automatiquement la place de chacun des composants sur la règle ou par exemple les composants d'une même famille ; le dispositif se présente en fait sous la forme d'un gabarit électronique.

Selon un mode de réalisation particulier, le dispositif selon l'invention consiste en une règle à diodes constituée d'un profilé support muni d'une série de cartes LED destinées à piloter lesdites diodes à partir des informations reçues de moyens électroniques et informatiques en forme d'ordinateur. Les cartes qui pilotent les diodes peuvent elles-mêmes être en réseau sur une carte mère commandée à partir des informations contenues dans les mémoires d'un ordinateur.

Dans le cadre d'armatures de béton armé le système de repérage et d'affichage permet d'obtenir automatiquement le positionnement des aciers de répartition à souder sur les filants de base. Ce positionnement est réalisé sur le poste d'assemblage directement ou éventuellement, en amont du poste d'assemblage, c'est-à-dire au niveau d'un poste de préparation. Dans ce dernier cas le positionnement des composants peut être repéré sur une pige qui servira de guide pour l'opérateur, au poste d'assemblage.

Selon un mode de réalisation particulier, l'installation comporte un ordinateur disposé au niveau du poste de positionnement. Cet ordinateur pilote l'affichage de la répartition longitudinale des composants ou familles de composants et reçoit ses informations à partir des moyens de mémorisation en forme d'ordinateur qui renferme l'ensemble des paramètres destinés à la réalisation de l'armature.

Les moyens d'activation du système de repérage et d'affichage peuvent être en forme de clavier ou de lecteur d'étiquettes au niveau du poste d'opérateur.

L'invention a également pour objet un procédé pour la mise en oeuvre de ladite installation, caractérisé en ce qu'il consiste :
- à mémoriser le ou les schémas de distribution sur des moyens informatiques ;
- à positionner les filants ou la pige sur les supports avec une de leurs extrémités en butée sur l'origine de la structure longitudinale en forme de règle ;
- à effectuer, selon les besoins, depuis le poste de positionnement, un appel des données spécifiques mémorisées sur lesdits moyens informatiques ;
- à transposer automatiquement lesdites données sur la structure longitudinale pour afficher la répartition d'au moins un composant ou famille de composants en regard des filants ou de la pige.

Par ce procédé l'opérateur dispose, sur demande et immédiatement, de l ensemble des repères nécessaires au positionnement des composants de l'armature sans autre manipulation que l'appel de ces repères au moyen d'un clavier ou d'un dispositif de lecture d'étiquettes.

Mais l'invention sera encore illustrée par la description suivante en liaison avec les dessins annexés dans lesquels :
- la figure 1 est une vue en perspective d'un mode de réalisation de l installation selon l'invention, destinée a la préparation des armatures,
- la figure 2 représente schématiquement une des possibilités de réalisation de l'invention, en liaison avec un système de gestion de plusieurs règles de positionnement de composants d'armatures,
- la figure 3 est une vue de côté d'un mode de réalisation de la règle selon l'invention,
- la figure 4 représente l'association d'une carte mère avec différentes cartes LED, constituant un mode de réalisation possible de la règle selon l'invention,
- la figure 5 représente sous forme de schéma bloc, les fonctions principales d'une carte mère,
- la figure 6 représente, sous forme de schéma bloc, les fonctions principales d'une carte LED,
- la figure 7 représente, vu de côté, un dispositif selon l'invention, aménagé pour le tracé de filants ou de piges.

La réalisation d'une armature pour béton est fonction de nombreux paramètres liés tant aux dimensions qu'à la résistance structurelle désirée. Cette réalisation nécessite une étude complète de la structure de l'armature, c'est-à-dire de la nature et de la distribution des aciers de répartition sur les aciers filants, lesquels forment en quelque sorte le châssis de la structure armante. Cette opération est généralement réalisée par le bureau d'étude ; celui-ci fournit les cotes ou coordonnées ainsi que la nature des aciers de répartition devant être assemblés au niveau de l'atelier.

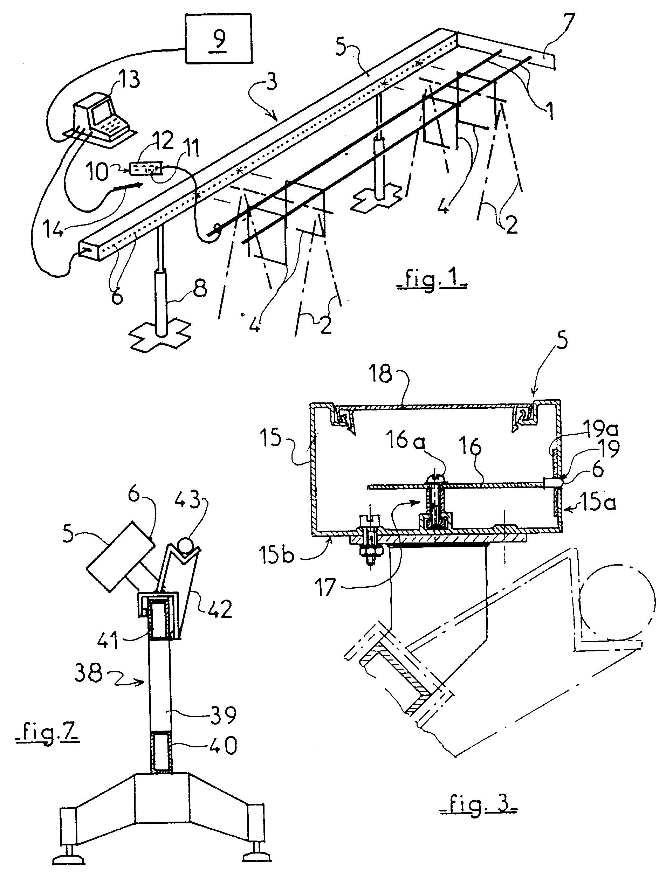

Un poste de travail, destiné à l'assemblage des différents composants d'armatures, est représenté figure 1.

Les aciers filants de base 1 sont positionnés horizontalement sur des tréteaux supports 2 représentés en traits mixtes fins. Ces filants 1 sont disposés entre l'opérateur et des moyens de repérage et d'affichage 3 de la distribution d'au moins une famille d'aciers de répartition 4. Ces moyens d'affichage consistent en une structure longitudinale 5 en forme de règle ou rampe, associée à un ensemble de repères 6 s'étendant sur toute la longueur du poste de travail, en regard de l'armature à assembler. Cette règle 5 supporte les repères 6 destinés à indiquer la répartition des composants d'armatures 4 sur les filants de base 1 ; elle est munie d'une butée 7 pour l'extrémité desdits filants de base 1. Cette butée 7 leur sert d'origine pour le placement des aciers de répartition, en liaison avec la règle de positionnement 5.

La règle 5 est également munie de pieds réglables 8 qui permettent l'adaptation de sa hauteur en liaison avec l'armature à assembler.

Le système d'affichage 3 est constitué d'une règle 5 de longueur variable suivant le type de pièces réalisées dans l'atelier. Cette règle 5 peut être réalisée à partir d'éléments de base de 4 mètres de long ; elle peut par exemple avoir une longueur de quatre, huit, douze ou seize mètres elle est munie d'un ensemble de repères 6 disposés sur toute sa longueur et espacés d'environ un cm, cette valeur étant fonction de la tolérance d'erreur admise pour ce type de construction.

Ces repères 6 sont destinés à indiquer la répartition des composants d'armatures 4 sur les filants 1 ; ils doivent donc être susceptibles de prendre au moins deux positions : une position inactive et une position active indiquant le positionnement de l'élément à assembler.

Dans le cas où un système à deux positions est utilisé, l'opérateur travaille par famille de composants. La règle 5 lui indique par les repères 6 le positionnement d'une famille de composants et lorsqu'il a fini son assemblage, il demande la répartition des éléments de la famille suivante.

Il est également possible de prévoir des moyens d'affichage "complexe" dans lequel les repères 6 peuvent prendre différentes positions permettant d'afficher la répartition de l'ensemble des composants et de différencier d'emblée chaque famille.

Le procédé de positionnement de composants d'armatures selon l'invention consiste à offrir à l'opérateur, directement sur son poste de travail, des moyens d'affichage d'emblée de la répartition d'au moins une famille de composants d'armatures à assembler sur la structure de base. Ces moyens d'affichage 3 peuvent comprendre un système de repérage 6 quelconque. Des diodes électroluminescentes sont préférées mais il est également ainsi possible de prévoir des repères 6 matériels consistant-par exemple en un ensemble de butées escamotables, d'électro-aimants ou autres, comme une buse jet d'encre, balayage laser pour traçage de raies. On peut également prévoir d'utiliser un système de repérage constitué d'une tête d'impression disposée sur un chariot mobile, lequel est muni de moyens de déplacement sur la longueur de la règle.

Ce système de repérage est géré de façon avantageuse par des moyens électroniques et informatiques réalisant automatiquement et sur demande, l'affichage du positionnement des composants d'armature désirés.

Un exemple de réalisation particulier de la conception d'un poste d'assemblage et de sa gestion, donné uniquement à titre indicatif, est représenté sur les différentes figures.

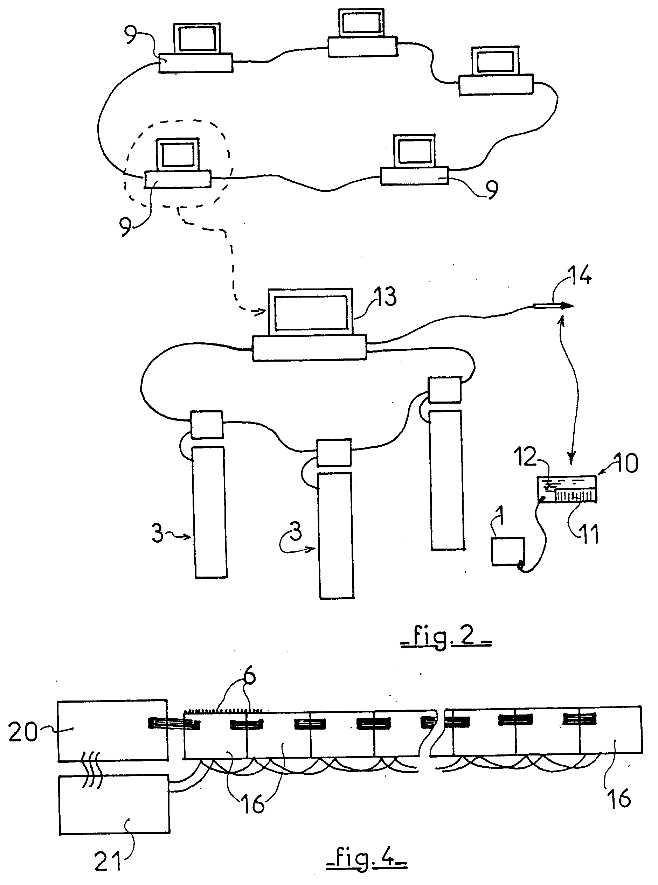

Les données de conception et d'exécution de l'armature, sont mémorisées sur un ordinateur 9 (figure 2) ; cette opération est réalisée par le bureau d'étude, dans le but d'une exploitation directe au niveau de l'atelier.

Des étiquettes 10 d'accompagnement de l'armature, figures 1 et 2, sont générées en parallèle à cette opération de mémorisation ; elles comportent un code barre 11 et une identification 12 de l'armature. Ces étiquettes 10 sont destinées à suivre la structure dès l'initiation de sa réalisation, jusqu'à la pose sur le chantier, permettant, entre autres, de déterminer le positionnement de l'armature au niveau de l'ensemble de la construction.

Au niveau de l'atelier, les moyens d'affichage 3 sont associés à un ordinateur 13 destiné à être utilisé par l'opérateur. Cet ordinateur 13 réalise la liaison entre les moyens informatiques 9 contenant en mémoire les données nécessaires à la réalisation de l'armature et les moyens d'affichage 3 sur le poste d'assemblage de l'armature. Cet ordinateur 13 est muni éventuellement d'un lecteur de code barre 14 pour la lecture du code 11 de l'étiquette 10 de l'armature à réaliser ; il peut aussi éventuellement, comme représenté figure 2, gérer plusieurs règles de positionnement 3 dans un même atelier, par un système de sélection.

Lorsque l'opérateur a positionné les filants de base 1 sur les tréteaux 2, avec une de leurs extrémités en butée sur l'origine 7, la lecture du code barre 11 de l'étiquette codée 10, au moyen du crayon optique 14, donne accès à la mémoire de l'ordinateur 9 correspondant, dans laquelle on trouve la distribution des aciers de répartition 4 à assembler. Dans le cas de l'assemblage d'armatures complexes, c'est-à-dire comportant plusieurs familles de composants 4 qui doivent être soudées sur les filants de base 1, ou sur des répartiteurs, la lecture du code barre 11 donne alors accès, au niveau de l'ordinateur 13, à un menu proposant l'une après l'autre, les différentes familles de composants 4 à assembler. La sélection d'une famille de composants permet l'affichage automatique, d'emblée, de sa répartition sur les filants de base 1. Cet affichage automatique est réalisé par les moyens d'affichage 3 constitués d'un système de repérage à diodes 6 disposé sur la règle 5 qui s'étend sur toute la longueur du poste de travail. L'opérateur peut alors positionner chaque élément face à son repère et réaliser l'assemblage des composants par soudage.

On peut noter que le système d'étiquette munie d'un code barre pour l'accès à la mémoire de l'ordinateur, peut être remplacé par tout moyen équivalent tel qu'une carte perforée ou tout simplement la frappe d'une clé ou d'un code d'accès correspondant à l'armature, sur le clavier de l'ordinateur 13.

La règle 5, représentée figure 3, consiste en un boîtier renfermant les moyens électroniques d'affichage représentés figure 4 ; cette règle constitue un véritable gabarit électronique.

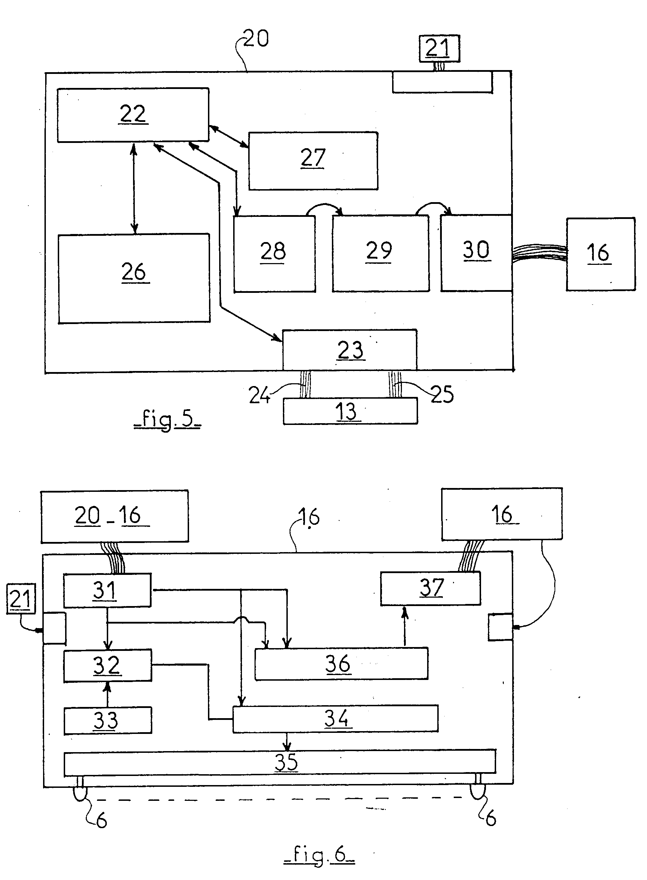

La règle 5 à diodes 6 est constituée d'un profilé 15 en forme de U dans lequel sont insérées une série de cartes LED 16 destinées à piloter lesdites diodes 6. Pour une règle 5 de longueur égale à 12 mètres, on pourra par exemple prévoir 75 cartes LED 16 supportant chacune seize diodes 6. Ces cartes LED 16 sont encastrées dans la face avant 15a, à l'intérieur du profil 15 en forme de U ; elles sont maintenues sur un support 17 associé au fond 15b du profilé 15. Chaque carte LED 16 peut être munie d'au moins un orifice central pour sa solidarisation sur le support 17 par exemple au moyen d'une vis 16a. Un cache 18 sert de couvercle au profilé 15 en forme de U, et, en même temps, d'accès à chacune des cartes. Le cache 18, métallique ou plastique, peut être divisé en compartiments ; chaque compartiment donnant directement accès à une carte LED 16 ou à un ensemble de cartes. Les diodes 6 solidaires des cartes 16 sortent par des orifices 19 prévus sur la face avant 15a pour servir, par leur éclairage, de repère pour le positionnement des aciers de répartition 4 ou autres. Une bande souple 19a, perforée, est collée à l'intérieur du U sur la face 15a pour servir de joint d'étanchéité. L'ensemble des cartes 16 pilotant les diodes 6 sont en réseau sur une carte mère 20, figures 4 et 5, associée à une alimentation 21 et recevant les informations des ordinateurs 9 et 13 pour sélectionner l'éclairage des diodes 6.

Le programme informatique de pilotage des cartes 16 et 20, ainsi que la structure électronique de ces cartes, sont réalisés de façon à obtenir l'affichage du positionnement des familles d'aciers de répartition à assembler au cours de l'opération de montage. Ces éléments ne sont pas détaillés dans la présente description ; ils sont réalisés de façon usuelle dans le domaine informatique et électronique de façon à obtenir le résultat recherché. Seule une réalisation fonctionnelle des cartes mères 20 et cartes LED 16 est ci-après décrite en liaison avec les figures 5 et 6, pour montrer leur propre structure logique et leur coopération.

La figure 5 représente la carte mère 20 sous forme de schéma bloc fonctionnel.

Son microprocesseur 22 est relié à l'ordinateur 13 par l'intermédiaire d'une interface série 23 et de deux systèmes de connexion 24, 25, correspondant respectivement au protocole d'émission et au protocole de réception des informations. Le microprocesseur 22 est en relation avec une mémoire 26 (RAM + EPROM) ainsi qu'avec un système 27 de reconnaissance de la carte mère (sélection logicielle) lorsque plusieurs règles sont gérées par le même ordinateur 13. Les informations provenant de l'ordinateur 13 et analysées par le microprocesseur 22 sont envoyées à une interface de sortie 28, lesquelles informations vont permettre la sélection de l'allumage des diodes suivant leur position sur les différentes cartes LED 16. Ces informations transitent par un adaptateur 29 des niveaux de sortie en niveau carte LED, et par un connecteur 30, pour parvenir à l'ensemble des cartes LED 16. La carte mère 20 est alimentée par l'alimentation 21.

La figure 6 représente un schéma bloc fonctionnel de l'une des cartes LED 16, identiques les unes aux autres.

Chaque carte LED 16 reçoit ses informations soit de la carte mère 20 s'il s'agit de la première carte LED, soit de la carte 16 positionnée juste avant au niveau de la règle 5. Ces informations sont reçues par un connecteur d'entrée 31 connecté à un comparateur 32 utilisant une référence de carte 33 de façon à vérifier que les informations reçues doivent bien être exploitées par cette carte LED précise. Les données sont transmises du connecteur d'entrée 31 à un système de verrouillage de l'information 34, actif si lesdites données ne sont pas destinées à cette carte. Dans le cas contraire, le système 34 laisse passer l'information qui arrive à un adaptateur 35 destiné à la manipulation des affichages LED. Cet adaptateur 35 réalise l'affichage des différentes diodes 6 suivant les informations reçues. Avant d'être transmises à la carte LED 16 suivante, si elle existe, toutes les informations passent éventuellement par un amplificateur 36 relié à un connecteur de sortie 37 réalisant la liaison avec la carte LED suivante. Chaque carte LED 16 est alimentée à partir de l'alimentation générale 21 soit directement, soit par l'intermédiaire de la carte 16 précédente, elle assure également l'alimentation de la carte suivante si elle existe.

On a représenté de côté, figure 7, une règle 5 selon l'invention, formant gabarit électronique, disposée sur un châssis 38. Le châssis 38 consiste en deux pieds latéraux 39 reliés par deux traverses, l'une inférieure 40 et l'autre supérieure 41. La règle 5 est disposée parallèlement et au-dessus des traverses 40, 41 ; elle est orientée vers l'utilisateur et inclinée par rapport à l'horizontale pour améliorer la lecture.

La traverse supérieure 41 sert de rail à un ensemble de supports 42 mobiles et escamotables. Ces supports 42 sont conformés pour supporter l'armature en cours de réalisation ou, comme représenté figure 7, une pige 43 positionnée parallèlement et à proximité des repères 6.

Une telle configuration permet l'obtention d'un dispositif efficace pour la préparation directe d'armatures métalliques ou pour le marquage de piges 43, lesquelles, une fois munies de la répartition des composants ou familles de composants, sont destinées à être transférées directement sur le poste d'assemblage, en regard de l'armature à réaliser.

Les signes de référence insérés après les caractéristiques techniques mentionnées dans les revendications ont pour seul but de faciliter la compréhension de ces dernières, et n'en limitent aucunement la portée.

## Revendications

1. Installation pour la fabrication d'armatures, pour béton armé notamment, constituées de filants longitudinaux (1) reliés par des composants transversaux, laquelle installation comporte des supports (2, 42) pour les filants longitudinaux (1) ou pour une pige (43) ainsi qu'une structure longitudinale en forme de règle (5) munie d'un système de repérage et d'affichage (3) de la répartition longitudinale d'au moins un composant ou famille de composant caractérisée en ce que ladite structure longitudinale en forme de règle (5) Comporte une origine (7) et est disposée en regard desdits filants (1) ou pige (43), et en ce que le système de repérage et d'affichage (3) est connecté à des moyens d'activation (13) qui permettent, grâce à des moyens électroniques et informatiques, sa mise en oeuvre automatique en fonction des données spécifiques du schéma de répartition longitudinale désiré, préalablement mémorisé sur des moyens informatiques (9).

2. Installation selon la revendication 1, caractérisée en ce que le système de repérage et d'affichage (3) consiste en un grand nombre de repères en forme de diodes électroluminescentes (6) disposées sur la longueur de la règle (5), cette dernière, associée à son système de repérage et d'affichage (3), constituant un gabarit pour le positionnement d'au moins un composant ou famille de composants.

3. Installation selon la revendication 2, caractérisée en ce que la règle (5) à diodes (6) est constituée d'un profilé (15) support d'une série de cartes LED (16) qui pilotent lesdites diodes (6) à partir des informations reçues des moyens d'activation (13).

4. Installation selon la revendication 3, caractérisée en ce que les cartes (16) à diodes (6) de la règle (5) sont pilotées par une carte mère (20) qui reçoit directement ses informations des moyens d'activation (13).

5. Installation selon la revendication 1, caractérisée en ce que le système de repérage consiste en une tête d'impression disposée sur un chariot mobile qui se déplace sur la longueur de la règle (5).

6. Installation selon l'une quelconque des revendications 1 à 5 caractérisée en ce qu'elle comporte un ordinateur (13) disposé au niveau du poste de positionnement, lequel ordinateur (13) pilote le repérage ou l'affichage de la répartition longitudinale des composants ou familles de composants et reçoit ses informations à partir des moyens de mémorisation (9) qui renferment l'ensemble des paramètres destinés à la réalisation de l'armature ou des armatures.

7. Installation selon l'une quelconque des revendications 1 à 6 caractérisée en ce qu'elle comporte des moyens d'activation du système de repérage et d'affichage (3), en forme de clavier, au niveau du poste d'opérateur.

8. Installation selon l'une quelconque des revendications 1 à 6 caractérisée en ce qu'elle comporte des moyens d'activation du système de repérage et d'affichage (3), en forme de lecteur d'étiquettes au niveau du poste d'opérateur.

9. Procédé pour la mise en oeuvre de l'installation selon l'une quelconque des revendications 1 à 8, caractérisé en ce qu'il consiste :
- à mémoriser le ou les schémas de distribution sur des moyens informatiques (9) ;
- à positionner les filants (1) ou la pige (43) sur les supports (2, 42) avec une de leurs extrémités en butée sur l'origine (7) de la structure longitudinale en forme de règle (5) ;
- à effectuer, selon les besoins, depuis le poste de positionnement, un appel des données spécifiques mémorisées sur lesdits moyens informatiques ;
- à transposer automatiquement lesdites données sur la structure longitudinale (5) pour afficher la répartition d'au moins un composant ou famille de composants en regard des filants (1) ou de la pige (43).

## Claims

1. An installation for the manufacture of reinforcements, especially for armoured concrete, made of longitudinal wires (1), connected by transversal components, whereby the said installation comprises supports (2, 42) for the longitudinal wires (1) or for a rod (43) as well as a rule-shaped longitudinal structure (5) fitted with a indexing and display system (3) of the longitudinal distribution of at least one component or family of components, characterised in that the said rule-shaped longitudinal structure (5) contains an origin (7) and is arranged opposite the said wires (1) or rod (43), and in that the indexing and display system (3) is connected to actuation means (13) which enable, thanks to electronic and computerized devices, to release the said system automatically in relation to data specific to the requested longitudinal distribution pattern, previously stored on a computer system (9).

2. An installation according to claim 1, characterised in that the indexing and display system (3) consists of a large number of pointers shaped like light-emitting diodes (6) arranged over the whole length of the rule (5), whereby the said rule, associated with its indexing and display system (3), forms a template for the indexing of at least one component or family of components.

3. An installation according to claim 2, characterised in that the rule (5) fitted with diodes (6) is made of a profile (15) supporting a series of LED-boards (16) which drive the said diodes (6) thanks to the information received from the actuation means (13).

4. An installation according to claim 3, characterised in that the boards (16) of the diodes (6) mounted on the rule (5) are driven by a mother-board (20) which receives directly its information from the actuation means (13).

5. An installation according to claim 1, characterised in that the indexing system consists of a print head arranged on a mobile trolley sliding over the whole length of the rule (5).

6. An installation according to any one of claims 1 to 5, characterised in that it contains a computer (13) arranged at the indexing station, whereby the said computer (13) drives the indexing or the display of the longitudinal distribution of the components or families of components and receives its information from the storage means (9) housing all the parameters dedicated to the manufacture of the reinforcement(s).

7. An installation according to any one of claims 1 to 6 characterised in that it comprises actuation means for the indexing and display system (3), shaped like a keyboard, at the level of the operating station.

8. An installation according to any one of claims 1 to 6, characterised in that it contains actuation means for the indexing and display system (3) shaped as label reader at the level of the operating station.

9. A process for the implementation of the installation according to any one of claims 1 to 8, characterised in that it consists in :
- memorising the distribution pattern(s) on a computerised means (9) ;
- positioning the wires (1) or the rod (43) on the supports (2, 42) with one of their ends bearing against the offset (7) of the rule-shaped longitudinal structure (5) ;
- calling up, according to the needs, from the positioning station, the specific memorised data on the said computerised means ;
- transposing automatically the said data on the longitudinal structure (5) to display the distribution of at least one component or family of components opposite the wires (1) or the rod (43).

## Patentansprüche

1. Anlage zur Herstellung von Armierungen, insbesondere armiertem Beton, bestehend aus durch Querkomponenten verbundene Längsstrangelemente (1), welche Anlage Stützelemente (2,42) für die Längsstrangelemente (1) oder für ein Maßelement (43) sowie eine längliche Struktur in Linealform (5) aufweist, das mit einem Ortsbestimmungs- und Anzeigesystem (3) für die Längsteilung wenigstens einer Komponente oder einer Komponentenfamilie versehen ist, dadurch gekennzeichnet, daß die besagte längliche Struktur in Linealform (5) einen Anfang (7) aufweist und gegenüber den besagten Strangelementen (1) oder dem Maßelement (43) angeordnet ist, und daß das Ortsbestimmungs- und Anzeigesystem (3) mit Betriebsmitteln (13) verbunden ist, die aufgrund von Elektronik- und Informatikmitteln seine Inbetriebnahme in Abhängigkeit von spezifischen Daten über das gewünschte Längsteilungsschema erlauben, das vorher auf Informatikmitteln gespeichert ist.

2. Anlage nach Anspruch 1, dadurch gekennzeichnet, daß das Ortsbestimmungs- und Anzeigesystem (3) aus einer großen Anzahl Marken in Form von Elektroluminiszenzdioden (6) besteht, die längs des Lineales (5) angeordnet sind, wobei letzteres in Verbindung mit seinem Ortsbestimmungs- und Anzeigesystem (3) eine Schablone zur Positionierung wenigstens einer Komponente oder einer Komponentenfamilie bildet.

3. Anlage nach Anspruch 2, dadurch gekennzeichnet, daß das Lineal (5) mit Dioden (6) mit einer Tragschiene (15) mit einer Reihe LED-Karten (16) gebildet ist, die die besagten Dioden (6) aufgrund erhaltener Informationen der Betriebsmittel (13) betätigen.

4. Anlage nach Anspruch 3, dadurch gekennzeichnet, daß die Karten (16) mit den Dioden (6) des Lineales (5) durch eine Mutterkarte (20) betätigbar sind, die ihre Informationen von den Betriebsmitteln (13) direkt erhält.

5. Anlage nach Anspruch 1, dadurch gekennzeichnet, daß das Ortsbestimmungssystem aus einem Druckkopf besteht, der auf einem beweglichen Schlitten angeordnet ist, der sich längs des Lineales (5) verstellen läßt.

6. Anlage nach einem der Ansprüche 1 - 5, dadurch gekennzeichnet, daß sie einen auf dem Niveau des Positionierungspostens angeordneten Computer (13) aufweist, der die Ortsbestimmung oder Anzeige der Längsteilung der Komponenten oder Komponentenfamilien steuert und seine Informationen aufgrund der Speicherung (9) erhält, die die Gesamtheit der zur Realisierung der Armierung oder der Armierungen bestimmten Parameter umfaßt.

7. Anlage nach einem der Ansprüche 1 - 6, dadurch gekennzeichnet, daß sie Betriebsmittel für das Ortsbestimmungs- und Anzeigesystem (3) in Form einer Tastatur auf dem Niveau des Postens der Bedienperson aufweist.

8. Anlage nach einem der Ansprüche 1 - 6, dadurch gekennzeichnet, daß sie Betriebsmittel für das Ortsbestimmungs- und Anzeigesystem (3) in Form eines Etikettenlesers auf dem Niveau des Postens der Bedienperson aufweist.

9. Verfahren zum Betrieb der Anlage nach einem der Ansprüche 1 - 8, gekennzeichnet durch:
- Speichern des oder der Verteilungsschemata in Informatikmitteln (9);
- Positionierung der Strangelemente (1) oder des Maßelements (43) auf den Stützelementen, wobei eines ihrer Enden am Anfang (7) der Längsstruktur in Form eines Lineales (5) anschlägt;
- vom Positionierungsposten anforderungsgemäßes Bewirken eines Abrufes spezifischer Daten, die in den besagten Informatikmitteln gespeichert sind;
- automatisches Übertragen der besagten Daten auf die Längsstruktur, um die Teilung wenigstens einer Komponente oder Komponentenfamilie gegenüber Strangelementen (1) oder dem Maßelement (43) anzuzeigen.
